# EUROPEAN PATENT SPECIFICATION

(11) **EP 2 391 295 B1**
(45) Date of publication and mention of the grant of the patent: **17.07.2013**
(21) Application number: 10706771.2
(22) Date of filing: 26.01.2010
(51) Int. Cl.: A61C 5/02

(54) **REAMER WITH IMPROVED BLADE FOR NI-TI INSTRUMENTS FOR ENDODONTIC PREPARATION**
FRÄSE MIT VERBESSERTER KLINGE FÜR NI-TI-INSTRUMENTE FÜR DIE ENDODONTISCHE VORBEREITUNG
ALÉSOIR AVEC LAME AMÉLIORÉE POUR INSTRUMENTS NI-TI POUR PRÉPARATION ENDODONTIQUE

(30) Priority: 02.02.2009 IT RM20090045
(43) Date of publication of application: 07.12.2011
(73) Proprietor: Sweden & Martina S.p.A., 35020 Due Carrare (PD) (IT)
(72) Inventor: Malagnino, Vito Antonio, 00161 Roma (IT)
(74) Representative: Vinci, Marcello
(86) International application number: PCT/IT2010/000018
(87) International publication number: WO 2010/086887

(56) References cited:
- WO-A-00/19934
- WO-A-97/40771
- US-A- 1 022 838
- US-A- 4 634 378
- US-A1- 2006 210 947
- US-A1- 2006 228 668

## Description

The present invention relates to a reamer with improved blade for Ni-Ti instruments for endodontic preparation.

More specifically, the invention concerns an instrument of the above kind with a double profile blade, having such features to permit a better use of the instrument by the dentistry.

As it is well known, the use of nickel - titanium instruments for endodontic has grown in the recent years.

Said instruments are used into fang channels, by a continuous rotation movement ensured by a "counter angle" handpiece, coupled with an endodontic motor, permitting a rotation speed between 250 and 350 rpm.

Continuous rotation at this speed permits obtaining a high working efficiency and speed. Said rotation speed can be used with Ni-Ti instruments, but it cannot be used with standard steel instruments since Ni-Ti alloy has super elasticity characteristics, and consequent flexibility and elasticity (or shape memory), so as to permit advancement of the instrument by its rotation within channels, circumferentially cutting dentin without deforming, even in case they must follow curved paths.

Continuous rotation movement of a spiral shaped blade within a channel causes a spontaneous advancement of the instrument, like a screw screwed within a suitable seat.

The above attitude of the instrument while rotating determines necessity by the dentistry of "controlling" the advancement in order to prevent a too quick, and thus "not controlled" progression that would cause the risk of blocking and even of breakage of the instrument.

Said control is usually obtained by an "incremental" advancement movement manually realised by dentistry of about one millimetre each time: instrument is let advancing for 1 mm and then slightly withdrawn backward, to be then again advanced for 1 mm, and so on.

However, notwithstanding the use of the above advancement technique, it occurs that, if during its advancement the instruments hits against the channel wall for a too long path, the same instrument can suddenly be subjected to a nor controlled forward acceleration, that could cause blocking and possible breakage within the channel. This kind of effect is known as "screwing".

Being each instrument realised with set diameters from its tip (each instrument has its own diameter and conicity, measured in centesimal of mm), and beading each instrument part of a sequence of instruments with different measures (particularly, in the present case, with growing measures), it is possible calculating depth in correspondence of which, by each specific instrument, this too big engagement can occur, and thus the possible consequent "screwing".

A first solution to the "screwing" problem is that suggested by FKG Company by an instrument with the commercial name Race^{®}. In this case, all along the worked portion of the blade it is present an alternated sequence of 2-3 mm of spiral having a first pitch and 2-3 mm of spiral having a different pitch.

Furthermore, instruments are available on the market characterised by two cutting blades, a growing pitch, and the non active tip.

Particularly, more recent instruments have been realised with the following sequence (first digit refers to the instrument diameter and second digit to the tapering angle): 10mm-4%, 15mm-5%. 20mm-6%, 25mm-6%. By realisation of the above innovative sequence, instruments have been realised comprised of Ni-Ti having much better performances with respect to the known ones.

US 4 634 378 A2 discloses an endodontic instrument with a blade having a growing pitch and a not active tip.

However, even the above mentioned solution does not permit preventing the "screwing" technical problem described in the above.

In view of the above, the Applicant has realised a solution permitting overcoming the above problem.

This result is obtained according to the invention suggesting the realisation of Ni-Ti instruments, preferably double blade instruments, with a growing pitch and not active tip, and an interruption of the blades at a set distance from the tip, in order to interrupt the advancement action of the blade, thus preventing "screwing".

It is therefore specific object of the present invention a reamer with improved blade for Ni-Ti instruments for endodontic preparation, said blade having a growing pitch and a not active tip, characterised in that an interruption of the blade spiral is provided at a set height along the extension of the same blade, said spiral, after said interruption, starting again its development.

Preferably, according to the invention, it is provided a double blade, said interruption being provided on spiral of each blade.

In a preferred embodiment of the invention, said interruption is provided at a distance of about 7 - 12 mm from the blade tip, preferably 8 - 10 mm.

The invention further relates to a set of instruments having each diameter/tapering angle sequence, characterised in that each instrument provides the feature of the interruption of the blade(s) pitch.

Particularly, according to the invention, said set of instruments will have the sequence of (first digit refers to the instrument diameter and second digit to the tapering angle) 10 mm - 3.5%, 15 mm - 4%, 20 mm - 5.5%, 25 mm - 6% or 6.5%.

Present invention will be now described for illustrative and not limitative purposes according to its preferred embodiment, with particular reference to the figures of the enclosed drawings, wherein:

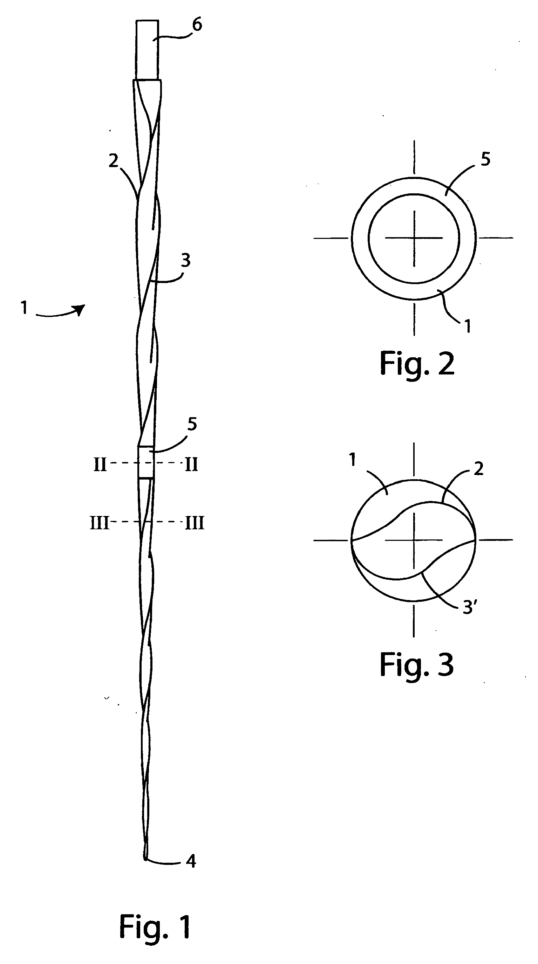

figure 1 is a perspective view of a reamer according to the invention;
figure 2 is a first section view of reamer of figure 1; and
figure 3 is a second section view of the reamer of figure 1.

A specific solution of the instrument according to the invention will be described in the following, but it is to be understood that indicated measures (length, diameter, height of interruption, ecc) are simply exemplificative, and the inventive solution gives the same results even with measures different with respect to those indicated.

Observing the figures of the enclosed drawings, it is shown a reamer 1 according to the invention, providing two spiral shaped blades 2, 3 and a not active tip 4.

Along said blades 2, 3, at a height of the reamer 1, particularly at a height of 7 - 12 mm, preferably about 8 - 10 mm, it is provided an interruption, generically indicated by reference number 5, of said blades 2, 3.

As it is well known, working portion of the instruments is usually long 16 mm. By the solution according to the present invention, length of the instrument (above mentioned 16 mm of length), comprised of two cutting blades 2, 3, has an interruption 5 at a height of about 8 or 9 mm, then starting again up to the handle 6 its development up to 16 mm.

Finally, sequence (first digit refers to the diameter of the instrument and second to the tapering angle) can be of 10 mm - 3.5%, 15 mm - 4%, 20 mm - 5.5%, 25 mm - 6% or 6.5%.

Set of instruments providing the solution according to the invention can thus provide a small instrument, easy to be used, thus permitting further fractioning the work.

As an alternative, set of instruments according to the invention, could start from 10 mm - 3.5% (or 4%) to reach 25 mm 6%, and exactly dividing between the two intermediate instruments the dentin thickness to be cut which is within the range of 6% - 4%.

Once reached the depth (at the set distance from the instrument), it will be possible interrupting progression, and thus possible screwing, interrupting blade spiral to make it immediately starting again toward the crown and slightly displaced clockwise with respect to the interruption.

As it can be understood from the above, by the solution according to the present invention, an instrument is obtained with blade interrupted at 8 or 9 mm from the tip, to start again at a distance of some degrees after interruption and in a slightly higher (more toward the crown) position.

Thus, instrument advancement is interrupted for a while, preventing fast and not controlled advancement or "screwing" effect occurring in those situations as indicated in the preceding.

The present invention has been described for illustrative but not limitative purposes according to its preferred embodiments, but it is understood that modifications and/or variations can be introduced from those skilled in the art without departing from the scope as defined in the enclosed claims.

## Claims

1. Reamer with improved blade for Ni-Ti instruments for endodontic preparation, said blade having a growing pitch and a not active tip, **characterised in that** an interruption of the blade spiral is provided at a set height along the extension of the same blade, said spiral, after said interruption, starting again its development.

2. Reamer according to claim 1, **characterised in that** it is provided a double blade, said interruption being provided on spiral of each blade.

3. Reamer according to claim 1, **characterised in that** said interruption is provided at a distance of about 7 - 12 mm from the blade tip, preferably 8 - 10 mm.

4. Set of instruments having each diameter/tapering angle sequence, **characterised in that** each instrument is according to one of the claims 1 - 3.

5. Set according to claim 4, **characterised in that** instruments are provided according to the sequence of instrument diameter and tapering angle 10 mm - 3.5%, 15 mm - 4%, 20 mm - 5.5%, 25 mm - 6% or 6.5%.

## Patentansprüche

1. Reamer mit verbesserter Schneide für Ni-Ti-Instrumente zur endodontischen Präparation, wobei die besagte Schneide eine zunehmende Teilung und keine aktive Spitze aufweist, **dadurch gekennzeichnet, dass** auf einer eingestellten Höhe entlang der Länge der Schneide eine Unterbrechung der Schneidenspirale vorhanden ist, wobei die besagte Spirale nach der besagten Unterbrechung ihren Verlauf wiederaufnimmt.

2. Reamer gemäß Patentanspruch 1, **dadurch gekennzeichnet, dass** er eine Doppelschneide aufweist und die besagte Unterbrechung an der Spirale jeder Schneide vorhanden ist.

3. Reamer gemäß Patentanspruch 1, **dadurch gekennzeichnet, dass** sich die besagte Unterbrechung in einem Abstand von circa 7-1 2 mm von der Schneidenspitze, vorzugsweise 8-1 0 mm, befindet.

4. Satz Instrumente mit jeweils einer Durchmesser-Kegelwinkelsequenz, **dadurch gekennzeichnet, dass** jedes Instrument einem der Patentansprüche 1 - 3 entspricht.

5. Satz gemäß Patentanspruch 4, **dadurch gekennzeichnet, dass** die Instrumente gemäß der Sequenz aus Instrumentendurchmesser und Kegelwinkel 10 mm - 3.5 %, 15 mm - 4 %, 20 mm - 5.5 %, 25 mm - 6 % oder 6.5 % aufweisen.

## Revendications

1. Alésoir à lame améliorée indiqué pour instruments Ni-Ti pour une préparation endodontique, ladite lame ayant un pas croissant et une pointe inactive, **caractérisé en ce qu'**une interruption de la spirale de la lame est prévue à une hauteur établie le long de l'extension de la même lame, ladite spirale, après ladite interruption, recommence son développement.

2. Alésoir selon la revendication 1, **caractérisé en ce qu'**il est doté d'une double lame, ladite interruption étant réalisée sur la spirale de chaque lame.

3. Alésoir selon la revendication 1, **caractérisé en ce que** ladite interruption est prévue à une distance d'environ 7 - 12 mm de la pointe de la lame, préférablement 8 - 10 mm.

4. Jeu d'instruments chacun ayant une séquence diamètre/angle d'effilement, **caractérisé en ce que** chaque instrument est conforme à l'une des revendications de 1 à 3.

5. Jeu selon la revendication 4, **caractérisé en ce que** les instruments sont réalisés selon la séquence diamètre de l'instrument / angle d'effilement 10 mm - 3,5%, 15 mm - 4%, 20 mm - 5,5%, 25 mm - 6% ou va.
